# EUROPEAN PATENT SPECIFICATION

(11) **EP 0 417 302 B1**
(45) Date of publication and mention of the grant of the patent: **02.07.1997**
(21) Application number: 90903401.9
(22) Date of filing: 21.02.1990
(51) Int. Cl.: C22C 29/02, C22C 29/16, B23B 27/14, B23B 51/00

(54) **NITROGEN-CONTAINING CERMET**
STICKSTOFFENTHALTENDER CERMET
CERMET CONTENANT DE L'AZOTE

(30) Priority: 22.02.1989 JP 42766/89; 22.02.1989 JP 42767/89; 22.02.1989 JP 44716/89
(43) Date of publication of application: 20.03.1991
(73) Proprietor: SUMITOMO ELECTRIC INDUSTRIES, LTD., Osaka-shi, Osaka 541 (JP)
(72) Inventor: ISOBE, K, Itami-shi Hyogo 664 (JP); NOMURA, T, Itami-shi Hyogo 664 (JP)
(74) Representative: Herrmann-Trentepohl, Werner, Dipl.-Ing.
(86) International application number: PCT/JP90/00200
(87) International publication number: WO 90/10090

(56) References cited:
- EP-A- 0 168 953
- DE-A- 3 208 282
- DE-A- 3 736 562
- JP-A- 6 112 846
- JP-A-60 208 447
- JP-A-63 109 139
- JP-A-63 297 537

## Description

### SPECIFICATION

### Field of the Invention

The present invention relates to a high-quality cermet alloy containing nitrogen which is excellent in wear resistance as well as toughness and capable of withstanding high-speed cutting, and a drill which is formed of such a cermet alloy.

### Background of the Invention

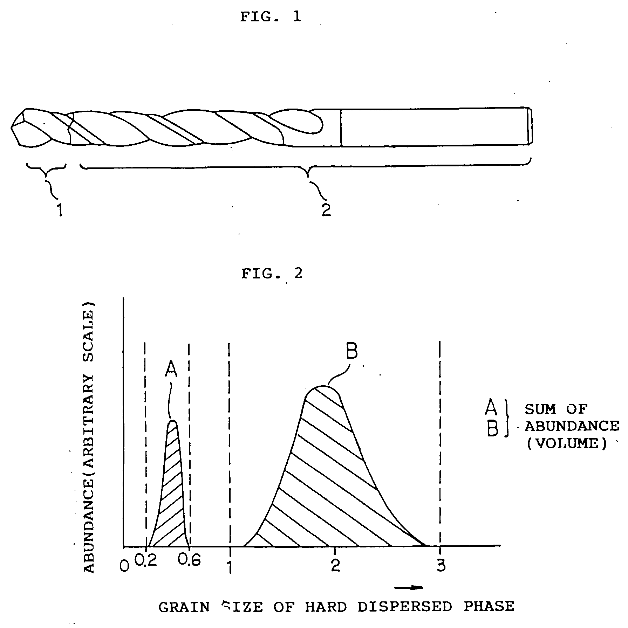

A drill is a cutting tool which is employed for punch working of steel or the like, while Fig. 1 shows the structure of a twist drill by way of example. The twist drill generally comprises a head portion 1 which is adapted to cutting, and a shank portion 2 which is not much concerned in cutting but mainly adapted to discharge chips as well as to mount the drill to a chuck portion etc. of a cutting machine such as a drilling machine.

In a working condition, the head portion and the shank portion of a drill are used in different loaded conditions. Therefore, characteristics required for the respective portions of the drill are different from each other. For example, wear resistance and deposition resistance etc. are required for a cutting edge part of the head portion, while toughness for maintaining strength of the tool is required for the shank portion. Also as to the cutting edge part of the head portion, different characteristics are required since the central part and the outer peripheral part thereof are extremely different in cutting speed from each other. In order to satisfy such complicated requirements, various materials have hitherto been developed for drills.

Up to this time, general materials for drills are high-speed steel and cemented carbide. High-speed steel, which is superior in toughness but inferior in wear resistance, is improper for high-speed cutting. On the other hand, cemented carbide, which is excellent in wear resistance as well as accuracy but has brittleness, may have been bent upon application to a machine tool having low rigidity, for example.

In order to improve these points, a structure of coating a head portion of high-speed steel with hard TiN, or a structure of preparing a head portion from cemented carbide and brazing the same etc. has been considered. However, the head portion subjected to coating has had such a disadvantage that a coating layer of at least its front flank side is removed when regrinding of the drill is executed and the greater part of the effect of coating is lost. Further, the structure of brazing the head portion with cemented carbide has had such a disadvantage that the same is not applicable to an uncuttable material and deep hole drilling since brazing itself is essentially inferior in thermal strength and mechanical strength.

In recent years, further, there have been proposed a structure of brazing different materials (P30 and D30) of cemented carbide (Japanese Utility Model Laying-Open No. 58-143115) or a structure of metallurgically integrating/joining the same (Japanese Utility Model Publication No. 62-46489) for attaining improvements in wear resistance and toughness etc., that noting difference between characteristics required for a central part and an outer peripheral part of a drill and making materials of cemented carbide for the central part and the outer peripheral part differ from each other to bring the same into a double structure (Japanese Patent Laying-Open No. 62-218010), or methods of forming this double structure by injection molding (Japanese Patent Laying-Open Nos. 63-38501 and 38502), and the like. In addition, there is a structure of preparing the material for a drill from cermet, in order to improve deposition resistance of the drill (Japanese Patent Laying-Open No. 62-292307) or the like. In these conventional examples, those preparing cemented carbide from coarse grains and bringing the same into highly binder phases for the purpose of improving toughness of the shank portions of the drills have unintendedly reduced strength of the materials or elastic change/distortion, to cause such a problem that the drills are bent during drilling by vibration of workpieces, instable rotation of the machines or the like.

Thus, improvements have hitherto been made from individual viewpoints, with respect to complicated requirements for drills. However, none of these conventional structures have completely satisfied the requirements for the overall characteristics of the drills.

In the Japanese Patent Laying Open No. 63-109139, a titanium carbide sintered alloy for cutting tool part is disclosed. The amount of fine grain sizes including in the hard phases of the sintered alloy is lower than in the present invention. Therefore, the wear resistance which depends on the ratio of fine grain hard phase and coarse grain hard phase is inferior to that of the present invention.

### Disclosure of the Invention

An object of the present invention is to provide a cermet alloy containing nitrogen, which exhibits excellent performances particularly in wear resistance and toughness.

Another object of the present invention is to provide a cermet drill formed of cermet, which has excellent wear resistance and deposition resistance in a head portion of the drill, while having necessary and sufficient characteristics in a shank portion.

Still another object of the present invention is to provide a drill of a sintered hard alloy formed of WC cemented carbide, which has excellent wear resistance and deposition resistance in a head portion of the drill while having necessary and sufficient characteristics in a shank portion.

The inventors have intended to improve wear resistance and deposition resistance in particular, among the characteristics required for a drill. The inventors have considered that it is requisite to employ cermet containing nitrogen, which is mainly composed of titanium (Ti), in order to improve wear resistance and deposition resistance. To this end, they have made parametric experiments with respect to various components contained in cermet, and have obtained a number of effective recognitions. The present invention has been proposed on the basis of these recognitions.

In a first aspect, the drill has the following features:
(1) Hard dispersed phases of cermet have mixed structures of finely classified fine-grain hard phases of 0.2 to 0.6 µm in grain size, and coarse-grain hard phases of 1 to 3 µm. The volume mixing ratio of the fine-grain hard phases to the coarse-grain hard phases is 0.3 to 3.0. Within this range, it is possible to effectively suppress generation and progress of cracking caused by a thermal shock which is applied to the cutting edge of the drill in employment. More preferably, the grain sizes of the fine-grain hard phases are 0.3 to 0.5 µm, and the grain sizes of the coarse-grain hard phases are 1.5 to 2.2 µm.
(2) The hard dispersed phases of cermet are composed of any one of a carbide, a nitride and a double carbo-nitride of titanium and one description or at least two descriptions of metals among metals of the groups IVb, Vb and VIb of the periodic table excluding titanium, and the composition of the hard dispersed phases is such that the titanium content in metal atoms is 0.5 to 0.95 in atomic ratio. Wear resistance and deposition resistance of cermet are rendered insufficient if the titanium content is less than 0.5. If it exceeds 0.95, on the other hand, the degree of sintering of cermet is deteriorated.
(3) The proportion of nitrogen in nonmetal atoms contained in the hard dispersed phases is 0.1 to 0.7 in atomic ratio. Namely, no such effect that nitrogen suppresses grain growth of the hard dispersed phases in sintering is attained if the proportion of nitrogen is less than 0.1 in atomic ratio. If it exceeds 0.7, on the other hand, the degree of sintering of cermet is deteriorated.
(4) The amount of binder metal phases contained in cermet is 5 percent by weight to 30 percent by weight. If it is less than 5 percent by weight, toughness of cermet is rendered so insufficient that chipping is caused in employment of the drill. If it exceeds 30 percent by weight, on the other hand, wear resistance is rendered so insufficient that significant wear is caused in a flank of the cutting edge or a margin part of the drill.

In a second aspect, the drill has the following features:
(1) In order to suppress generation and progress of cracking which is caused by a thermal shock at the cutting edge of the drill, the volume mixing ratio of fine-grain hard phases of 0.2 to 0.6 µm in grain size to coarse-grain hard phases of 1 to 3 µm in grain size must be in a range of 0.3 to 3.0. More preferably, the grain sizes of the fine-grain hard phases are 0.3 to 0.5 µm, and the grain sizes of the coarse-grain hard phases are 1.5 to 2.2 µm.
(2) In order to increase toughness/strength required for a shank portion, the hard dispersed phases of cermet must be in fine structures of 0.2 to 0.6 µm in grain size. The aforementioned two cermet materials are similar in composition to each other, although the same are different in characteristic from each other. Thus, it is possible to continuously join/form these materials without employing a discontinuous and low-strength joining method such as brazing. An example of such a joining method is press (dry bag) time junction, HIP time junction or the like.

According to the aforementioned recognitions, a head portion and a shank portion of a drill, which are formed of different compositions of cermet materials, are integrally joined with each other. The composition of each part of this drill and characteristics thereof are now described.

### I. Head portion

### A. Components of Hard Dispersed Phases

a. The hard dispersed phases are composed of any one of a carbide, a nitride and a double carbo-nitride of titanium and one description or at least two descriptions of metals among metals of the groups IVb, Vb and VIb of the periodic table excluding titanium, and the titanium content in metal atoms contained in the hard dispersed phases is in a range of 0.5 to 0.95 in atomic ratio. Wear resistance and deposition resistance of cermet are rendered insufficient if the titanium content is less than 0.5. If it exceeds 0.95, on the other hand, the degree of sintering of cermet is deteriorated.
b. The proportion of nitrogen in nonmetal atoms contained in the hard dispersed phases is 0.1 to 0.7 in atomic ratio. Namely, no such effect that nitrogen atoms suppress grain growth of the hard dispersed phases in sintering is attained if it is less than 0.1. If it exceeds 0.7, on the other hand, the degree of sintering of cermet is deteriorated.
c. The hard dispersed phases are mixtures of fine-grain hard phases of 0.2 to 0.6 µm in grain size, and the volume ratio of the fine-grain hard phases to the coarse-grain hard phases is in a range of 0.3 to 3.0. If it is less than 0.3, toughness is rendered so inferior that chipping is caused in the cutting edge part of the drill. If it exceeds 3.0, on the other hand, thermal shock resistance is so deteriorated that thermal cracking is caused.

### B. Amount of Binder Metal Phases Contained in Cermet

a. The amount of the binder metal phases contained in cermet is in a range of 5 percent by weight to 30 percent by weight. If it is less than 5 percent by weight, toughness is rendered so insufficient that chipping is caused in the cutting edge. If it exceeds 30 percent by weight, on the other hand, wear resistance is rendered so insufficient that significant wear is caused in the flank of the cutting edge or a margin part.

### II. Shank Portion

Since high toughness is required for the shank portion, difference in thermal expansion coefficient between the same and the cutting edge part must be not more than 1.0 x 10⁻⁶/°C, in order to implement a low Young's modulus deformable in response to a bending load and excellent in junction with the cutting edge part.

### A. Components of Hard Dispersed Phases

a. The hard dispersed phases are composed of any one of a carbide, a nitride and a double carbo-nitride of titanium and one description or at least two descriptions of metals among metals of the groups IVb, Vb and VIb of the periodic table excluding titanium, and the titanium content in metal atoms contained in the hard dispersed phases is in a range of 0.5 to 0.95 in atomic ratio. Junction with the cutting edge part is deteriorated if it is less than 0.5. The degree of sintering of cermet is deteriorated if it exceeds 0.95.
b. The proportion of nitrogen in nonmetal atoms contained in the hard dispersed phases is in a range of 0.1 to 0.7 in atomic ratio. If it is less than 0.1, grain growth of the hard dispersed phases is caused in sintering of cermet, and no prescribed grain sizes can be obtained. The degree of sintering of cermet is deteriorated if it exceeds 0.7.
c. The grain sizes of the hard dispersed phases are in fine-grain structures of 0.2 to 0.6 µm. If the grain sizes exceed 0.6 µm, strength of cermet is deteriorated and it is not possible to maintain sufficient toughness which is required for the shank portion.

### B. Amount of Binder Metal Phases Contained in Cermet

The amount of the binder metal phases contained in cermet is in a range of 5 percent by weight to 30 percent by weight. Strength is rendered insufficient if it is less than 5 percent by weight, while cermet causes plastic deformation if it exceeds 30 percent by weight. If it is out of the aforementioned range, further, difference in thermal expansion coefficient between the same and the cutting edge part is unpreferably increased.

Thus, according to the second aspect, a head portion and a shank portion which are different in grain size/composition from each other are integrally joined/molded.

The inventors have also attained such a recognition that employment of WC-based cemented carbide is preferable in order to satisfy toughness and strength required for a shank portion of a drill. In a third aspect, cermet which is excellent in wear resistance and deposition resistance is employed for the head portion of the drill, while WC-based cemented carbide which is excellent in toughness is employed for the shank portion. The head portion and the shank portion are integrally joined with each other. The characteristics of this drill are now described.

### I. Head portion

### A. Components of Hard Dispersed Phases of Cermet

a. The hard dispersed phases are composed of a carbide, a nitride or a double carbo-nitride of titanium (Ti) and one description or at least two descriptions of metals among metals of the groups IVb, Vb and VIb of the periodic table excluding titanium, and the titanium content in metal atoms contained in the hard dispersed phases is in a range of 0.5 to 0.95 in atomic ratio. Wear resistance and deposition resistance of cermet are rendered insufficient if it is less than 0.5. If it exceeds 0.95, on the other hand, the degree of sintering of cermet is deteriorated.
b. The proportion of nitrogen in nonmetal atoms contained in the hard dispersed phases is in a range of 0.1 to 0.7 in atomic ratio. If it is less than 0.1, such an effect that nitrogen suppresses grain growth of the hard dispersed phases in sintering of cermet cannot be attained. If it exceeds 0.7, on the other hand, the degree of sintering of cermet is deteriorated.
c. The hard dispersed phases are formed of mixtures of fine-grain hard phases of 0.2 to 0.6 µm in grain size and coarse-grain hard phases of 1 to 3 µm in grain size, and the volume ratio of the fine-grain hard phases to the coarse-grain hard phases is in a range of 0.3 to 3. Namely, toughness of cermet is so deteriorated that chipping is caused in the cutting edge part of the drill if it is less than 0.3. If it exceeds 3.0, on the other hand, thermal cracking occurs in the cutting edge of the drill to cause a problem.

### B. Amount of Binder Metal Phases Contained in Cermet

The amount of the binder metal phases contained in cermet is in a range of 5 percent by weight to 30 percent by weight. If it is less than 5 percent by weight, toughness of cermet is rendered so insufficient that chipping is caused in the cutting edge of the drill. If it exceeds 30 percent by weight, on the other hand, wear resistance is rendered so insufficient that significant wear is caused in a flank of the cutting edge or a margin part.

### II. Shank Portion

A. WC-based cemented carbide is employed for the shank portion of the drill. If high-speed steel or the like is employed, for example, lip breakage of a head portion is easily caused by thermal expansion difference between the same and cermet forming the head portion, since its thermal expansion coefficient is large. Further, the Young's modulus of high-speed steel is about 1/3 that of a WC-based alloy, to prompt wear/defect of the head portion due to inferior vibration resistance in cutting.

### Brief Description of the Drawings

Fig. 1 is a diagram showing the structure of a general twist drill.

Fig. 2 is a hard dispersed phase grain size distribution diagram showing grain size distribution of hard dispersed phases of cermet.
Best Modes of Carrying Out the Invention

### Example 1

Cermet alloys having various material compositions and grain size distributions were used to prepare drills of 10 mm in diameter by the respective single materials, and working performances thereof were experimentally examined. Table 1 shows compositions etc. of the various alloys subjected to the experiment, and alloys Nos. A to C in the Table indicate the inventive samples, while D to H indicate comparative samples used for comparison. Among the comparative samples, D and E are used for comparison of proportions of nitrogen atoms in nonmetal atoms contained in hard dispersed phases. Further, the comparative sample F is used for comparison of grain size ratios of the hard dispersed phases. In addition, the comparative samples G and H are used for comparison of proportions of amounts of binder phases. The comparative samples D to H and the inventive samples A to C were compared/studied with each other.

**Table 1**

| Classification | Alloy No. | Hard Dispersed Phase | | | | | | Amount of Binder Metal Phase (wt.%) | | Grain Size Abundance Ratio of Hard Phase A/B (*1) |
|---|---|---|---|---|---|---|---|---|---|---|
| | | Composition Ratio of Metal Atoms | | | | | Nonmetal Atomic Ration N/C+N | | | |
| | | Ti | Ta | W | Mo | Nb | | Ni | Co | |
| Inventive | A | 75 | 6 | 12 | - | 7 | 0.38 | 9 | 10 | 2.4 |
| Sample | B | 87 | 5 | 8 | - | - | 0.41 | 10 | 12 | 1.0 |
| | C | 80 | 4 | 5 | 5 | 6 | 0.46 | 8 | 10 | 0.8 |
| Comparative | D | 80 | 5 | 7 | 2 | 6 | 0 | 8 | 12 | 0.2 |
| Sample | E | 73 | 6 | 8 | 6 | 7 | 0.72 | 10 | 12 | 0.1 |
| | F | 82 | 2 | 13 | - | 3 | 0.43 | 9 | 11 | at least 20 |
| | G | 73 | 8 | 9 | - | 10 | 0.37 | 1.5 | 2.5 | 1.1 |
| | H | 85 | 6 | 4 | - | 5 | 0.42 | 15 | 19 | 1.4 |

| | | | | | | | | | | |
|---|---|---|---|---|---|---|---|---|---|---|
| (*1) Grain Size "Abundance" A Ratio of Hard Phase : B (Volume Ratio), (Refer to Fig. 2) | | | | | | | | | | |

Table 2 shows conditions of drilling performance evaluation tests for drills. The performance evaluation tests were performed under two types of conditions. The test 1 is a wear resistance evaluation test for the drills. Namely, this is a test of performing continuous drilling work until the drills reach the ends of life due to breakage or wear, for evaluating the status of the cutting edges thereof.

The test 2 is a thermal cracking resistance evaluation test for drills. Namely, this is a test of performing deep hole drilling in the same portion of each workpiece a plurality of times for evaluating the cutting edge status after completion of prescribed drilling.

**Table 2**

| No. | Test Name | Test Condition | |
|---|---|---|---|
| | | Item | Condition |
| ① | Wear Resistance Evaluation Test (Continuous Drilling) | Workpiece | S50C (H_{B} = 230) |
| | | Cutting Speed | 60m/min., wet type (water soluble cutting oil) |
| | | Feed Rate | 0.23mm/rev |
| | | Depth | 25mm |
| | | Criterion | status of cutting edge after working up to end of life |
| ② | Thermal Cracking Resistance Evaluation Test (Step Feed) | Workpiece | SCM425 (H_{B} = 260) |
| | | Cutting Speed | 50m/min., wet type (water soluble cutting oil) |
| | | Feed Rate | 0.25mm/rev |
| | | Depth | drawn out every drilling by 5 mm and subjected to re-drilling. repeated 5 times, up to 25 mm |
| | | Criterion | status of cutting edge after working 500 holes |

In this experiment, a similar cutting test was also performed on a coated high-speed steel drill and a coated carbide drill, which are used nowadays, for reference.

Table 3 shows the results of the aforementioned drill performance evaluation tests. The following matters have been clarified from the results of experiment shown in Table 3:
a. In comparison of the inventive samples A to C and the comparative samples D and E, it has been clarified that materials containing large amounts of coarse grains in grain sizes of the hard dispersed phases are inferior in shank strength and inferior in toughness by sudden breakage etc., as shown in the results of the wear resistance test 1.
b. In comparison of the inventive samples A to C and the comparative sample F, it has been clarified that the drill is superior in shank strength but is significantly inferior in thermal cracking resistance (test 2) when the grain sizes of the hard dispersed phases are only with fine grains.
c. In comparison of the inventive samples A to C and the comparative samples G and H, it has been clarified that the sample (comparative sample G) containing a small amount of binder phases is inferior in toughness (test 1), and the sample (comparative sample H) containing a large amount of binder phases is inferior in wear resistance (test 1 and test 2).

From comparison of these results of the experiment, it has been proved that the inventive samples A to C have excellent characteristics over the entire aspects of wear resistance, thermal cracking resistance and shank toughness/strength. It has further been clarified from Table 3 that the samples also exhibit excellent characteristics as compared with the coated high-speed steel and the coated carbide medium. The inventive samples have such features that the same exhibit performances which are equivalent to those of new products also when the same are further used after being subjected to regrinding.

**Table 3**

| Classification | Alloy No. | Test ① | | Test ② |
|---|---|---|---|---|
| | | Number of Drilling | Status of Cutting Edge | Status of Cutting Edge |
| Inventive Sample | A | 2450 holes | normally worn | good |
| | B | 2390 holes | normally worn | good |
| | C | 2660 holes | normally worn | good |
| Comparative Sample | D | 384 holes | broken | two cracks with 500 holes |
| | E | 1248 holes | broken | caused chipping with 500 holes |
| | F | 2580 holes | margin part worn | got defective with 284 holes |
| | G | 104 holes | got defective | got defective with 32 holes |
| | H | 624 holes | front flank worn | front flank worn with 245 holes |
| Existing Sample | Coated with High-Speed Steel | 114 holes | front flank worn | worn with 24 holes |
| | Coated with Carbide (Single Material) | 2040 holes | rake face worn | rake face worn with 500 holes |
| | Coated with Carbide (Cutting Edge Alone) | 1820 holes | rake face worn | rake face worn with 500 holes |

### Example 2

Table 4 shows compositions and grain size distributions etc. of cermet alloys used for an experiment. These cermet alloys were used to prepare drills of 10 mm in diameter with the respective single materials, and drilling performances thereof were examined. As to the alloy groups shown in Table 4, grain size distributions of hard dispersed phases were noted in the group of alloys AA to FF, for example. Proportions of nitrogen in nonmetal atoms were mainly noted in the group of alloys GG to II. Further, the amounts of binder phases were mainly noted in the group of alloys JJ to MM.

**Table 4**

| Classification (*2) | Alloy No. | Hard Dispersed Phase | | | | | | Amount of Bidner Metal Phase (wt.%) | | Grain Size Abundance Ratio of Hard Phase A/B (*1) |
|---|---|---|---|---|---|---|---|---|---|---|
| | | Composition Ration of Metal Atoms | | | | | Nonmetal Atomic Ratio N/C+N | | | |
| | | Ti | Ta | W | Mo | Nb | | Ni | Co | |
| Inventive Sample 1 | AA | 85 | 7 | 8 | - | - | 0.42 | 10 | 10 | at least 20 |
| Comparative Sample | BB | 85 | 7 | 8 | - | - | 0.42 | 10 | 10 | 4.0 |
| Inventive Sample 2 | CC | 85 | 7 | 8 | - | - | 0.42 | 10 | 10 | 2.5 |
| Inventive Sample 2 | DD | 85 | 7 | 8 | - | - | 0.42 | 10 | 10 | 1.0 |
| Comparative Sample | EE | 85 | 7 | 8 | - | - | 0.42 | 10 | 10 | 0.2 |
| Comparative Sample | FF | 85 | 7 | 8 | - | - | 0.42 | 10 | 10 | not more than 0.05 |
| Comparative Sample | GG | 80 | 10 | 7 | - | 3 | 0.08 | 8 | 7 | 1.5 |
| Inventive Sample 2 | HH | 80 | 6 | 5 | 2 | 7 | 0.36 | 9 | 5 | 1.5 |
| Comparative Sample | II | 83 | 4 | 5 | 2 | 6 | 0.75 | 10 | 6 | 1.5 |
| Comparative Sample | JJ | 73 | 8 | 9 | - | 10 | 0.38 | 3 | 1.5 | not more than 0.05 |
| Inventive Sample 2 | LL | 85 | 6 | 4 | - | 5 | 0.42 | 12 | 8 | 0.7 |
| Comparative Sample | MM | 82 | 4 | 1 | 3 | 10 | 0.32 | 20 | 20 | not more than 0.05 |

| | | | | | | | | | | |
|---|---|---|---|---|---|---|---|---|---|---|
| (*1) Grain Size "Abundence" A Ratio of Hard Phase : B (volume Ratio), (Refer to Fig. 2) | | | | | | | | | | |
| (*2) Inventive Sample 1: for Shank Inventive Sample 2: for Cutting Edge | | | | | | | | | | |

Performance evaluation tests were made under conditions shown in Table 5. Namely, a wear resistance evaluation test and a thermal cracking resistance evaluation test. Table 6 shows the results of the respective tests.

**Table 5**

| No. | Test Name | Test Condition | |
|---|---|---|---|
| | | Item | Condition |
| ① | Wear Resistance Evaluation Test (Continuous Drilling) | Workpiece | S50C (H_{B} = 230) |
| | | Cutting Speed | 60m/min., wet type (water soluble cutting oil) |
| | | Feed Rate | 0.23mm/rev |
| | | Depth | 25mm |
| | | Criterion | status of cutting edge after working up to end of life |
| ② | Thermal Cracking Resistance Evaluation Test (Step Feed) | Workpiece | SCM425 (H_{B} = 260) |
| | | Cutting Speed | 50m/min., wet type (water soluble cutting oil) |
| | | Feed Rate | 0.25mm/rev |
| | | Depth | drawn out every drilling by 5 mm and subjected to re-drilling. repeated 5 times, up to 25 mm |
| | | Criterion | status of cutting edge after working 500 holes |

**Table 6**

| Classification | Alloy No. | Test ① | | Test ② |
|---|---|---|---|---|
| | | Number of Drilling | Status of Cutting Edge | Status of Cutting Edge |
| Inventive Sample 1 | AA | 2550 holes | margin worn | chipped with 224 holes |
| Comparative Sample | BB | 2610 holes | margin worn | caused chipping with 500 holes |
| Inventive Sample 2 | CC | 2430 holes | shank broken | good |
| | DD | 2580 holes | shank broken | good |
| Comparative Sample | EE | 2110 holes | front flank worn | broken with 128 holes |
| | FF | 505 holes | broken | good |
| Comparative Sample | GG | 1420 holes | broken | caused chipping with 280 holes |
| Inventive Sample 2 | HH | 2500 holes | shank broken | good |
| Comparative Sample | II | 2780 holes | margin worn | margin chipped with 500 holes |
| Comparative Sample | JJ | 160 holes | chipped | chipped with 15 holes |
| Inventive Sample 2 | LL | 2640 holes | shank broken | good |
| Comparative Sample | MM | 480 holes | front flank worn | front flank worn with 240 holes |

In the results of the group of the alloys AA to FF, the alloys AA to DD having relatively fine grain sizes of hard dispersed phases exhibited excellent wear resistance. The alloys EE and FF caused sudden breakage. As to thermal cracking resistance, the alloys AA and BB having fine grain sizes exhibited inferior results. As to shank strength, the alloy AA was most excellent, and the samples showed a tendency of being worse as the grain sizes of the hard dispersed phases were roughened (order of alloys CC to FF).

Thus, it has been proved that the alloys CC and DD are excellent in wear resistance and thermal cracking resistance and the alloy AA is excellent in shank strength in the group of the alloys AA to FF.

It has been proved that the life of the alloy GG is short and the alloy II is inferior in shank strength in the alloys GG to II.

In the group of the alloys JJ to MM, the alloy LL exhibited superior thermal cracking resistance. From the results, the alloy LL has properties suitable for a cutting edge part.

From the results shown in Table 6, the alloys CC, DD, HH and LL were selected as alloys having properties suitable for a head portion of a drill, and the alloys AA was selected as alloy having properties suitable for a shank portion of the drill. Several types of drills were prepared by integrally joining/molding these alloys respectively, and subjected to performance evaluation tests. Table 7 shows combinations of the alloys employed for the cutting edge parts and the shank portions of the drills and the results of the evaluation tests thereof. The performance evaluation tests were made along the conditions shown in Table 5. A method of joining alloys with each other by thermal diffusion, or a method of joining and molding the respective ones in powder compression molding and thereafter integrating the same in sintering, and the like are used as methods of coupling/forming the cutting edge parts and the shank portions of the drills. For the purpose of reference, Table 7 also shows test results of a currently used coated high-speed drill and coated carbide drills.

**Table 7**

| Composite Alloy No. | Combination | | Test ① | | Test ② |
|---|---|---|---|---|---|
| | Cutting Edge | Shank | Number of Drilling | Status of Cutting Edge | Status of Cutting Edge |
| NN | CC | AA | 2790 holes | margin worn | good |
| OO | DD | AA | 2680 holes | front flank worn | good |
| PP | DD | KK | 2730 holes | front flank worn | good |
| QQ | HH | KK | 2840 holes | front flank worn | good |
| Coated with High-Speed Steel | | | 145 holes | front flank worn | worn with 20 holes |
| Coated with Carbide (Single Material) | | | 1980 holes | rake face worn chipped | rake face worn with 500 holes |
| Coated with Carbied (Cutting Edge Alone) | | | 1770 holes | rake face worn | rake face worn with 500 holes |

Comparing the results of the performance evaluation tests shown in Table 7 with Table 6, it is clarified that every one of the present composite alloys NN to QQ has wear resistance, thermal cracking resistance and high toughness. Further, the composite alloys NN to QQ caused absolutely no breakage which was suddenly caused in the alloys EE and FF, for example, in the performance evaluation tests shown in Table 6. In addition, it has been clarified that the present composite alloys have high quality since no change was recognized in various properties thereof even if the head portions were reground.

### Example 3

A sintered hard alloy drill is formed by using a cermet alloy for a head portion, using WC cemented carbide for a shank portion, joining the same in press forming of fine particles, and sintering the same. Table 8 shows compositions and grain size distributions etc. of cermet alloy portions of sintered hard alloy drills subjected to performance tests and drills used for comparison. Referring to Table 8, alloys DDD and EEE of comparative samples were used mainly noting proportions of nonmetal atoms contained in the hard dispersed phases. Further, an alloy FFF of the comparative sample was used noting the grain size distribution of the hard dispersed phases. In addition, alloys GGG and HHH of the comparative samples were used noting proportions of binder metal phases contained in the cermet materials.

**Table 8**

| Classification | Alloy No. | Hard Dispersed Phase | | | | | | Amount of Binder Phase (wt.%) | | Grain Size Abundance Ratio of Hard Phase A/B (*1) |
|---|---|---|---|---|---|---|---|---|---|---|
| | | Composition Ratio of Metal Atoms | | | | | Nonmetal Atomic Ratio N/C+N | | | |
| | | Ti | Ta | W | Mo | Nb | | Ni | Co. | |
| Inventive | AAA | 83 | 7 | 10 | - | - | 0.42 | 10 | 11 | 2.3 |
| Sample | BBB | 72 | 4 | 10 | 4 | 10 | 0.37 | 9 | 10 | 1.0 |
| | CCC | 88 | 5 | 5 | - | 2 | 0.50 | 7 | 14 | 0.7 |
| Comparative | DDD | 86 | 5 | 4 | - | 5 | 0 | 10 | 11 | 0.2 |
| Sample | EEE | 80 | 6 | 5 | 2 | 7 | 0.75 | 8 | 12 | 0.1 |
| | FFF | 73 | 8 | 9 | - | 10 | 0.40 | 9 | 10 | at least 20 |
| | GGG | 82 | 10 | 3 | 1 | 4 | 0.46 | 2 | 2 | 1.2 |
| | HHH | 80 | 10 | 7 | 1 | 2 | 0.32 | 13 | 18 | 1.5 |

| | | | | | | | | | | |
|---|---|---|---|---|---|---|---|---|---|---|
| (*1) Grain Size Dependence A Ratio of Hard Phase: B (Volume Ratio), (Refer to Fig. 2) | | | | | | | | | | |

Performance evaluation tests of the drills were made by preparing drills of 10 mm in diameter through the materials of the alloys AAA to HHH shown in Table 8, under conditions shown in Table 9. The performance evaluation tests are mainly formed by a wear resistance evaluation test and a thermal cracking resistance test.

**Table 9**

| No. | Test Name | Test Condition | |
|---|---|---|---|
| | | Item | Condition |
| ① | Wear Resistance Evaluation Test (Continuous Drilling) | Workpiece | S50C (H_{B} = 230) |
| | | Cutting Speed | 55m/min., wet type (water soluble cutting oil) |
| | | Feed Rate | 0.21mm/rev |
| | | Depth | 25mm |
| | | Criterion | status of cutting edge after working up to end of life |
| ② | Thermal Cracking Resistance Evaluation Test (Step Feed) | Workpiece | SCM435 (H_{B} = 280) |
| | | Cutting Speed | 50m/min., wet type (water soluble cutting oil) |
| | | Feed Rate | 0.23mm/rev |
| | | Depth | drawn out every drilling by 5 mm and subjected to re-drilling. repeated 5 times, up to 25 mm |
| | | Criterion | status of cutting edge after working 500 holes |

Table 10 shows the results of the aforementioned drill performance evaluation tests. Referring to Table 10, the alloys DDD and EEE were inferior particularly in thoughness of the cutting edge part, and suddenly caused breakage during the test ① in comparison of the alloys AAA to CCC with the alloys DDD and EEE.

In comparison of the alloys AAA to CCC with the alloy FFF, it has been proved that the alloy FFF was inferior in thermal cracking resistance.

In comparison of the alloys AAA to CCC with the alloys GGG and HHH, it has been proved that the alloy GGG was inferior in thermal cracking resistance and its life was extremely short. It has also been proved that the alloy HHH was also inferior in wear resistance.

For the purpose of comparison, the performance tests were also made on currently used coated high-speed steel or coated carbide drills and the like. Comparing these drills with the drills of the alloys AAA to CCC, it is clear that the performances of the drills of the inventive samples are superior in any test.

The performance evaluation tests were also made on the alloys AAA to CCC of the inventive samples, and a drill made of a single material of the alloy AAA and a drill made of a single material of WC cemented carbide, for example. As the result, a characteristic improvement is recognized in strength in the alloy AAA according to the present invention in comparison of the alloy AAA of the inventive sample and the alloy AAA of the single material. Comparing the alloy AAA of the inventive sample with the WC cemented carbide, further, it is clear that the alloy AAA according to the present invention is superior in both wear resistance and strength.

**Table 10**

| Classification | Alloy No. | Test ① | | Test ② |
|---|---|---|---|---|
| | | Number of Drilling | Status of Cutting Edge | Status of Cutting Edge |
| Inventive | AAA | 2630 holes | normally worn | good |
| Sample | BBB | 2440 holes | normally worn | good |
| | CCC | 2540 holes | normally worn | good |
| Comparative | DDD | 390 holes | broken | two cracks with 500 holes |
| Sample | EEE | 1308 holes | broken | caused chipping with 500 holes |
| | FFF | 2480 holes | margin worn | chipped with 343 holes |
| | GGG | 212 hole | chipped | chipped with 82 holes |
| | HHH | 845 holes | front flank worn | worn with 245 holes |
| Reference | Coated with High-Speed Steel | 84 holes | front flank worn | worn with 18 holes |
| | Coated with Carbide (Single Material) | 2120 holes | rake face worn | rake face worn with 500 holes |
| | Coated with Carbide (Cutting Edge Alone) | 1940 holes | rake face worn | rake face worn with 500 holes |
| | Alloy AAA (Single Material) | 1420 holes | broken | good |
| | WC Cemented Carbide | 1430 holes | entirely significantly worn | cause chipping with 342 holes |

### Industrial Availability

As hereinabove described, the cermet alloy containing nitrogen according to the present invention is advantageously applicable to a drill, an end mill, a cutting tool for milling or the like, for which excellent properties are required in wear resistance, toughness and high-speed cutting.

## Claims

1. A cermet alloy containing nitrogen comprising hard dispersed phases composed of any one of a carbide, a nitride and a double carbo-nitride of titanium and one description or at least two descriptions of metals among metals of the groups IVb, Vb and VIb of the periodic table excluding titanium, and binder metal phases composed of nickel and cobalt, wherein
said hard dispersed phases include a metal atom group containing titanium and a nonmetal atom group containing nitrogen,
the amount of said titanium contained in said metal atom group is at least 0.5 and not more than 0.95 in atomic ratio,
the amount of said nitrogen contained in said nonmetal atom group is at least 0.1 and not more than 0.7 in atomic ratio,
said hard dispersed phases comprise a fine grain group of at least 0.2 µm and not more than 0.6 µm in grain size and a coarse grain group of at least 1 µm and not more than 3 µm in grain size,
the volume ratio of said fine grain group to said coarse grain group is at least 0.3 and not more than 3, and
the proportion of said binder metal phases contained in said cermet alloy containing nitrogen is at least 5 percent by weight and not more than 30 percent by weight.

2. A cermet drill formed of cermet comprising hard dispersed phases composed of any one of a carbide, a nitride and a double carbo-nitride of titanium and one description or at least two descriptions of metals among metals of the groups IVb, Vb and VIb of the periodic table excluding titanium, and binder metal phases composed of nickel and cobalt, wherein
said hard dispersed phases include a metal atom group containing titanium and a nonmetal atom group containing nitrogen,
the amount of said titanium contained in said metal atom group is at least 0.5 and not more than 0.95 in atomic ratio,
the amount of said nitrogen contained in said nonmetal atom group is at least 0.1 and not more than 0.7 in atomic ratio,
said hard dispersed phases comprise a fine grain group of at least 0.2 µm and not more than 0.6 µm in grain size and a coarse grain group of at least 1 µm and not more than 3 µm in grain size,
the volume ratio of said fine grain group to said coarse grain group is at least 0.3 and not more than 3, and
the proportion of said binder metal phases contained in said cermet is at least 5 percent by weight and not more than 30 percent by weight.

3. A cermet drill formed of cermet comprising hard dispersed phases composed of any one of a carbide, a nitride and a double carbo-nitride of titanium and one description or at least two descriptions of metals among metals of the groups IVb, Vb, and VIb of the periodic table excluding titanium, and binder metal phases composed of nickel and cobalt while comprising a head portion for cutting a workpiece and a shank portion having a part mounted on a prescribed mounting position of a cutting machine, wherein
said hard dispersed phases include a metal atom group containing titanium and a nonmetal atom group containing nitrogen,
the amount of said titanium contained in said metal atom group is at least 0.5 and not more than 0.95 in atomic ratio,
the amount of said nitrogen contained in said nonmetal atom group is at least 0.1 and not more than 0.7 in atomic ratio,
the proportion of said binder metal phases contained in said cermet is at least 5 percent by weight and not more than 30 percent by weight,
said hard dispersed phases of said cermet forming said head portion comprise a fine group of at least 0.2 µm and not more than 0.6 µm in grain size and a coarse grain group of at least 1 µm and not more than 3 µm in grain size,
the volume ratio of said fine grain group to said coarse grain group is at least 0.3 and not more than 3, and
the most parts of said hard dispersed phases of said cermet forming said shank portion are formed by a grain group of at least 0.2 µm and not more than 0.6 µm in grain size.

4. A sintered hard alloy drill comprising a head portion for cutting a workpiece and a shank portion having a part mounted on a prescribed mounting position of a cutting machine, wherein
said head portion is formed of cermet comprising hard dispersed phases composed of any one of a carbide, a nitride and a double carbo-nitride of titanium and one description or at least two descriptions of metals among metals of the groups IVb, Vb and VIb of the periodic table excluding titanium, and binder metal phases composed of nickel and cobalt,
said hard dispersed phases include a metal atom group containing titanium and a nonmetal atom group containing nitrogen,
the amount of said titanium contained in said metal atom group is at least 0.5 and not more than 0.95 in atomic ratio,
the amount of said nitrogen contained in said nonmetal atom group is at least 0.1 and not more than 0.7 in atomic ratio,
said hard dispersed phases comprise a fine grain group of at least 0.2 µm and not more than 0.6 µm in grain size and a coarse grain group of at least 1 µm and not more than 3 µm in grain size,
the volume ratio of said fine grain group to said coarse grain group is at least 0.3 and not more than 3,
the proportion of said binder metal phases contained in said cermet is at least 5 percent by weight and not more than 30 percent by weight, and
said shank portion is integrally joined with said head portion, and formed of WC cemented carbide containing cobalt.

## Patentansprüche

1. Stickstoffhaltiges Sinterhartmetall, das harte dispergierte Phasen, die aus einem Carbid, Nitrid und Carbonitrid des Titans und einer Art oder mindestens zweier Arten von Metallen der Gruppen IVb, Vb und VIb des Periodensystems der Elemente, außer Titan, zusammengesetzt sind, und Bindemetallphasen, die aus Nickel und Cobalt bestehen, umfaßt, wobei
die harten dispergierten Phasen einen Titan umfassenden Metallatomanteil und einen Stickstoff umfassenden Nichtmetallatomanteil enthalten,
der im Metallatomanteil enthaltene Titangehalt, ausgedrückt als Atomanteil, mindestens 0,5 und höchstens 0,95 beträgt,
der im Nichtmetallatomanteil enthaltene Stickstoffgehalt, ausgedrückt als Atomanteil, mindestens 0,1 und höchstens 0,7 beträgt,
die harten dispergierten Phasen einen Feinkornanteil von mindestens 0,2 µm und höchstens 0,6 µm Korngröße und einen Grobkornanteil von mindestens 1 µm und höchstens 3 µm Korngröße enthalten,
das Volumenverhältnis des Feinkornanteils zum Grobkornanteil mindestens 0,3 und höchstens 3 beträgt und
der Anteil der Bindemetallphasen, die im stickstoffhaltigen Sinterhartmetall enthalten sind, mindestens 5 Gew.-% und höchstens 30 Gew.-% beträgt.

2. Sinterhartmetall-Bohrer, welcher aus einem Sinterhartmetall gebildet ist, das harte dispergierte Phasen, die aus einem Carbid, Nitrid und Carbonitrid des Titans und einer Art oder mindestens zweier Arten von Metallen der Gruppen IVb, Vb und VIb des Periodensystems der Elemente, außer Titan, zusammengesetzt sind, und Bindemetallphasen, die aus Nickel und Cobalt bestehen, umfaßt, wobei
die harten dispergierten Phasen einen Titan umfassenden Metallatomanteil und einen Stickstoff umfassenden Nichtmetallatomanteil enthalten,
der im Metallatomanteil enthaltene Titangehalt, ausgedrückt als Atomanteil, mindestens 0,5 und höchstens 0,95 beträgt,
der im Nichtmetallatomanteil enthaltene Stickstoffgehalt, ausgedrückt als Atomanteil, mindestens 0,1 und höchstens 0,7 beträgt,
die harten dispergierten Phasen einen Feinkornanteil von mindestens 0,2 µm und höchstens 0,6 µm Korngröße und einen Grobkornanteil von mindestens 1 µm und höchstens 3 µm Korngröße enthalten,
das Volumenverhältnis des Feinkornanteils zum Grobkornanteil mindestens 0,3 und höchstens 3 beträgt und
der Anteil der Bindemetallphasen, die im Sinterhartmetall enthalten sind, mindestens 5 Gew.-% und höchstens 30 Gew.-% beträgt.

3. Sinterhartmetall-Bohrer, welcher aus einem Sinterhartmetall gebildet ist, das harte dispergierte Phasen, die aus einem Carbid, Nitrid und Carbonitrid des Titans und einer Art oder mindestens zweier Arten von Metallen der Gruppen IVb, Vb und VIb des Periodensystems der Elemente, außer Titan, zusammengesetzt sind, und Bindemetallphasen, die aus Nickel und Cobalt bestehen, umfaßt, und einen Kopfteil zum Schneiden eines Werkstücks und einen Schaftteil mit einem Bereich, der in einer vorgeschriebenen Befestigungsposition in einer Schneidmaschine eingespannt ist, enthält, wobei
die harten dispergierten Phasen einen Titan umfassenden Metallatomanteil und einen Stickstoff umfassenden Nichtmetallatomanteil enthalten,
der im Metallatomanteil enthaltene Titangehalt, ausgedrückt als Atomanteil, mindestens 0,5 und höchstens 0,95 beträgt,
der im Nichtmetallatomanteil enthaltene Stickstoffgehalt, ausgedrückt als Atomanteil, mindestens 0,1 und höchstens 0,7 beträgt,
der Anteil der Bindemetallphasen, die im Sinterhartmetall enthalten sind, mindestens 5 Gew.-% und höchstens 30 Gew.-% beträgt,
die harten dispergierten Phasen des Sinterhartmetalls, das den Kopfteil bildet, einen Feinkornanteil von mindestens 0,2 µm und höchstens 0,6 µm Korngröße und einen Grobkornanteil von mindestens 1 µm und höchstens 3 µm Korngröße enthalten,
das Volumenverhältnis des Feinkornanteils zum Grobkornanteil mindestens 0,3 und höchstens 3 beträgt und
die meisten Teile der harten dispergierten Phasen des Sinterhartmetalls, das den Schaftteil bildet, aus einem Kornanteil von mindestens 0,2 µm und höchstens 0,6 µm Korngröße bestehen.

4. Sinterhartmetall-Bohrer, welcher einen Kopfteil zum Schneiden eines Werkstücks und einen Schaftteil mit einem Bereich, der in einer vorgeschriebenen Befestigungsposition in einer Schneidmaschine eingespannt ist, enthält, wobei der Kopfteil aus einem Sinterhartmetall gebildet ist, das harte dispergierte Phasen, die aus einem Carbid, Nitrid und Carbonitrid des Titans und einer Art oder mindestens zweier Arten von Metallen der Gruppen IVb, Vb und VIb des Periodensystems der Elemente, außer Titan, zusammengesetzt sind, und Bindemetallphasen, die aus Nickel und Cobalt bestehen, umfaßt,
die harten dispergierten Phasen einen Titan umfassenden Metallatomanteil und einen Stickstoff umfassenden Nichtmetallatomanteil enthalten,
der im Metallatomanteil enthaltene Titangehalt, ausgedrückt als Atomanteil, mindestens 0,5 und höchstens 0,95 beträgt,
der im Nichtmetallatomanteil enthaltene Stickstoffgehalt, ausgedrückt als Atomanteil, mindestens 0,1 und höchstens 0,7 beträgt,
die harten dispergierten Phasen einen Feinkornanteil von mindestens 0,2 µm und höchstens 0,6 µm Korngröße und einen Grobkornanteil von mindestens 1 µm und höchstens 3 µm Korngröße enthalten,
das Volumenverhältnis des Feinkornanteils zum Grobkornanteil mindestens 0,3 und höchstens 3 beträgt,
der Anteil der Bindemetallphasen, die im Sinterhartmetall enthalten sind, mindestens 5 Gew.-% und höchstens 30 Gew.-% beträgt und
der Schaftteil mit dem Kopfteil integral verbunden und aus cobalthaltigem, auf WC basierendem Hartmetall gebildet ist.

## Revendications

1. Alliage de cermet contenant de l'azote comprenant des phases dures dispersées composées de n'importe lequel d'un carbure, d'un nitrure et d'un double carbonitrure de titane et d'une sorte ou d'au moins deux sortes de métaux parmi les métaux des groupes IVb, Vb et VIb de la classification périodique sauf le titane, et des phases métalliques de liant composées de nickel et de cobalt, dans lequel
lesdites phases dures dispersées incluent un groupe d'atomes métalliques contenant du titane et un groupe d'atomes non métalliques contenant de l'azote,
la quantité dudit titane contenu dans ledit groupe d'atomes métalliques est au moins de 0,5 et de pas plus de 0,95 en rapport atomique,
la quantité dudit azote contenu dans ledit groupe d'atomes non métalliques est d'au moins 0,1 et de pas plus de 0,7 en rapport atomique,
lesdites phases dures dispersées comprennent un groupe de grains fins d'une granulométrie d'au moins 0,2 µm et de pas plus de 0,6 µm et un groupe de grains grossiers d'une granulométrie d'au moins 1 µm et de pas plus de 3 µm,
le rapport en volume du groupe de grains fins au groupe de grains grossiers est d'au moins 0,3 et de pas plus de 3, et
la proportion de phases métalliques de liant contenues dans ledit alliage de cermet contenant de l'azote, est d'au moins 5 pour-cent en poids et de pas plus de 30 pour-cent en poids.

2. Foret de cermet formé de cermet comprenant des phases dures dispersées composées de n'importe lequel d'un carbure, d'un nitrure et d'un double carbonitrure de titane et d'une sorte ou d'au moins deux sortes de métaux parmi les métaux des groupes IVb, Vb et VIb de la classification périodique sauf le titane, et de phases métalliques de liant composées de nickel et de cobalt, dans lequel
lesdites phases dures dispersées incluent un groupe d'atomes métalliques contenant du titane et un groupe d'atomes non métalliques contenant de l'azote,
la quantité dudit titane contenu dans ledit groupe d'atomes métalliques est au moins de 0,5 et de pas plus de 0,95 en rapport atomique,
la quantité dudit azote contenu dans ledit groupe d'atomes non métalliques est d'au moins 0,1 et de pas plus de 0,7 en rapport atomique,
lesdites phases dures dispersées comprennent un groupe de grains fins d'une granulométrie d'au moins 0,2 µm et de pas plus de 0,6 µm et un groupe de grains grossiers d'une granulométrie d'au moins 1 µm et de pas plus de 3 µm,
le rapport en volume du groupe de grains fins au groupe de grains grossiers est d'au moins 0,3 et de pas plus de 3, et
la proportion de phases métalliques de liant contenues dans ledit alliage de cermet contenant de l'azote est d'au moins 5 pour-cent en poids et de pas plus de 30 pour-cent en poids.

3. Foret de cermet formé de cermet comprenant des phases dures dispersées composées de n'importe lequel d'un carbure, d'un nitrure et d'un double carbonitrure de titane et d'une sorte ou d'au moins deux sortes de métaux parmi les métaux des groupes IVb, Vb et VIb de la classification périodique sauf le titane, et des phases métalliques de liant composées de nickel et de cobalt, tout en comprenant une portion de tête pour découper une pièce à usiner et une portion de corps ayant une partie montée sur une position de montage prescrite d'un machine de coupe, dans lequel
lesdites phases dures dispersées incluent un groupe d'atomes métalliques contenant du titane et un groupe d'atomes non métalliques contenant de l'azote,
la quantité dudit titane contenu dans ledit groupe d'atomes métalliques est au moins de 0,5 et de pas plus de 0,95 en rapport atomique,
la quantité dudit azote contenu dans ledit groupe d'atomes non métalliques est d'au moins 0,1 et de pas plus de 0,7 en rapport atomique,
la proportion de phases métalliques de liant contenues dans ledit cermet est d'au moins 5 pour-cent en poids et de pas plus de 30 pour-cent en poids,
lesdites phases dures dispersées dudit cermet formant ladite portion de tête comprennent un groupe de grains fins d'une granulométrie d'au moins 0,2 µm et de pas plus de 0,6 µm et un groupe de grains grossiers d'une granulométrie d'au moins 1 µm et de pas plus de 3 µm,
le rapport en volume du groupe de grains fins au groupe de grains grossiers est d'au moins 0,3 et de pas plus de 3, et
la plupart desdites phases dures dispersées dudit cermet formant ladite portion de corps sont formées par un groupe de grains d'une granulométrie d'au moins 0,2 µm et de pas plus de 0,6 µm.

4. Foret en alliage dur fritté comprenant une portion de tête pour découper une pièce à usiner et une portion de corps ayant une partie montée sur une position de montage prescrite d'une machine de coupe, dans lequel
ladite portion de tête est formée d'un cermet comprenant des phases dures dispersées composées de n'importe lequel d'un carbure, d'un nitrure et d'un double carbonitrure de titane et d'une sorte ou d'au moins deux sortes de métaux parmi les métaux des groupes IVb, Vb et VIb de la classification périodique sauf le titane, et de phases métalliques de liant composées de nickel et de cobalt,
lesdites phases dures dispersées incluent un groupe d'atomes métalliques contenant du titane et un groupe d'atomes non métalliques contenant de l'azote,
la quantité dudit titane contenu dans ledit groupe d'atomes métalliques est au moins de 0,5 et de pas plus de 0,95 en rapport atomique,
la quantité dudit azote contenu dans ledit groupe d'atomes non métalliques est d'au moins 0,1 et de pas plus de 0,7 en rapport atomique,
lesdites phases dures dispersées comprennent un groupe de grains fins d'une granulométrie d'au moins 0,2 µm et de pas plus de 0,6 µm et un groupe de grains grossiers d'une granulométrie d'au moins 1 µm et de pas plus de 3 µm,
le rapport en volume du groupe de grains fins au groupe de grains grossiers est d'au moins 0,3 et de pas plus de 3, et
la proportion de phases métalliques de liant contenues dans ledit cermet est d'au moins 5 pour-cent en poids et de pas plus de 30 pour-cent en poids, et
ladite portion de corps est jointe intégralement à ladite portion de tête, et formée de carbure de WC cémenté contenant du cobalt.
